# EUROPEAN PATENT APPLICATION

(11) **EP 4 794 001 A1**
(43) Date of publication of application: **19.08.2026**
(21) Application number: 26155587.4
(22) Date of filing: 30.01.2026
(51) Int. Cl.: H01M 4/04, H01M 4/131, H01M 4/1391, H01M 4/36

(54) **CATHODE FOR LITHIUM SECONDARY BATTERY, THE METHOD OF MANUFACTURING THE SAME AND LITHIUM SECONDARY BATTERY COMPRISING THE SAME**

(30) Priority: 12.02.2025 KR 20250018132
(71) Applicant: SK On Co., Ltd., Seoul 03161 (KR)
(72) Inventor: RYU, Jaechan, 34124 Daejeon (KR); CHOE, Ui Jin, 34124 Daejeon (KR); KIM, Sung Kyung, 34124 Daejeon (KR)
(74) Representative: Stolmár & Partner Patentanwälte PartG mbB

(57) **Abstract**

The present disclosure relates to a cathode for a lithium secondary battery including a cathode current collector; and a cathode composite layer formed on the cathode current collector, wherein the cathode composite layer includes a first cathode composite layer on a side of the cathode current collector, and a second cathode composite layer on a surface side of the cathode composite layer, wherein the first cathode composite layer includes a first cathode active material of lithium transition metal composite oxide particles in forms of secondary particles in which primary particles are aggregated, and a binder, wherein the second cathode composite layer includes a second cathode active material of lithium transition metal composite oxide particles in forms of single particles, and a binder.

## Description

### TECHNICAL FIELD

The disclosure and implementations disclosed in this patent document generally relate to a cathode for a lithium secondary battery, a method for manufacturing the same, and a lithium secondary battery including the same.

### BACKGROUND

Lithium secondary batteries may charge electricity therein or discharge electricity therefrom, and may be applied to a wide range of applications such as a digital camera, a mobile phone, a laptop, a hybrid vehicle, an electric vehicle, and an energy storage system (ESS).

Typically, lithium secondary batteries utilize a liquid electrolyte in a battery case. However, existing lithium secondary batteries containing such a liquid electrolyte may pose a risk of igniting due to leakage of the liquid electrolyte. Furthermore, electrode reactions may decompose the liquid electrolyte to generate gas in the battery case, causing a battery to expand.

In order to prevent the problems appearing in the lithium secondary batteries using the liquid electrolyte, research and development on an all-solid-state lithium secondary battery to which a solid electrolyte is applied have been actively conducted.

### SUMMARY

According to one aspect of the present disclosure, a cathode for a lithium secondary battery having excellent ionic conductivity, fast-charge characteristics, and excellent cycle life characteristics may be provided.

The present disclosure relates to a cathode for a lithium secondary battery including a cathode current collector; and a cathode composite layer formed on the cathode current collector, wherein the cathode composite layer includes a first cathode composite layer on a side of the cathode current collector, and a second cathode composite layer on a surface side of the cathode composite layer, wherein the first cathode composite layer includes a first cathode active material of lithium transition metal composite oxide particles in forms of secondary particles in which primary particles are aggregated, and a binder, wherein the second cathode composite layer includes a second cathode active material of lithium transition metal composite oxide particles in forms of single particles, and a binder.

The first cathode composite layer may further include a second cathode active material.

The second cathode active material may be included in an amount of 1 to 49 wt% relative to a total weight of the first cathode active material and the second cathode active material included in the first cathode composite layer.

The second cathode composite layer may further include a first cathode active material.

The first cathode active material may be included in an amount of 1 to 49 wt% relative to a total weight of the first cathode active material and the second cathode active material included in the second cathode composite layer.

A thickness of the second cathode composite layer may be greater than a thickness of the first cathode composite layer.

The first cathode composite layer and the second cathode composite layer may have a thickness ratio of 1:2 to 1:15.

The cathode composite layer may further include a third cathode composite layer between the first cathode composite layer and the second cathode composite layer, wherein the third cathode composite layer may include a first cathode active material and a second cathode active material.

A first cathode active material amount of the third cathode composite layer may be less than a first cathode active material amount of the first cathode composite layer, and a second cathode active material amount of the third cathode composite layer may be less than a second cathode active material amount of the second cathode composite layer.

The third cathode composite layer may include two or more layers, and among the two or more layers of the third cathode composite layer, a layer closer to the first cathode composite layer may have a higher binder amount than a layer closer to the second cathode composite layer.

The cathode composite layer may further include a solid electrolyte.

Another aspect of the present disclosure relates to a lithium secondary battery including the cathode for a lithium secondary battery.

The lithium secondary battery may include the cathode, an anode, and a solid electrolyte membrane between the cathode and the anode.

Another aspect of the present disclosure relates to a method for manufacturing a cathode for a lithium secondary battery, including: forming a first cathode composite layer on a cathode current collector using a first cathode slurry including a first cathode active material, which is lithium transition metal composite oxide particles having forms of secondary particles in which primary particles are aggregated, and a binder; and forming a second cathode composite layer on the first cathode composite layer using a second cathode slurry including a second cathode active material, which is lithium transition metal composite oxide particles having forms of single particles, and a binder, wherein the first cathode slurry includes a greater binder amount than the second cathode slurry, based on a weight percent value, and the binder amount in the first cathode slurry is 1.0 wt% or more and less than 5.0 wt%.

The binder amount in the second cathode slurry may be 0.5 to 3.5 wt%.

A weight percent value ratio of the binder in the first cathode slurry to the binder in the second cathode slurry may be 1.0 to 5.0:0.5 to 3.5.

### BRIEF DESCRIPTION OF DRAWINGS

Certain aspects, features, and advantages of the present disclosure may be illustrated by the following detailed description with reference to the accompanying drawings.
FIG. 1 is a schematic cross-sectional view of a cathode for a lithium secondary battery according to an embodiment of the present disclosure.
FIG. 2 is an SEM photograph of a cross-section of the cathode obtained in Inventive Example 1.
FIGS. 3A to 3D are SEM-EDX analysis photographs of the cathode manufactured in Inventive Example 1. FIG. 3A illustrates distribution characteristics of lithium, FIG. 3B illustrates distribution characteristics of Os, FIG. 3C illustrates distribution characteristics of carbon, and FIG. 3D illustrates distribution characteristics of S.
FIG. 4 is a view illustrating distribution characteristics of Os in B of FIGS. 3A to 3D by concentration.
FIG. 5 is a schematic cross-sectional view of the half-cell lithium secondary battery manufactured in Inventive Example 1.
FIG. 6 is a graph illustrating capacity changes according to charge/discharge cycles of a lithium secondary battery including the cathode of Inventive Example 1.
FIG. 7 is a schematic cross-sectional view of the bi-cell lithium secondary battery manufactured in Inventive Example 1.
FIG. 8 is a graph illustrating charge cycle characteristics and required CC time and CV time for 5^{th} and 98^{th} fast-charge cycles of a lithium secondary battery using the cathode of Inventive Example 1.
FIG. 9 is a graph illustrating changes in capacity retention rate following a 1.7C fast-charge/discharge cycle of a lithium secondary battery using the cathode of Inventive Example 1.
FIG. 10 is a graph illustrating changes in capacity retention rate following a 0.33C charge/discharge cycle after a 1.7C fast-charge/discharge cycle of a lithium secondary battery using the cathode of Inventive Example 1.
FIG. 11 is a graph illustrating changes in capacity over charge/discharge cycles of a lithium secondary battery including the cathode of Comparative Example 1.
FIG. 12 is a graph illustrating changes in capacity over charge/discharge cycles of a lithium secondary battery including the cathode of Comparative Example 2.
FIG. 13 is a graph illustrating changes in capacity over charge/discharge cycles of a lithium secondary battery including the cathode of Comparative Example 3.
FIG. 14 is a graph illustrating changes in capacity over charging/discharging cycles of a lithium secondary battery including the cathode of Comparative Example 4.

### DETAILED DESCRIPTION

The present disclosure will be described in detail below. However, this is merely illustrative, and the present disclosure is not limited to the specific embodiments described as examples.

An embodiment of the present disclosure relates to a cathode for a lithium secondary battery. The cathode for a lithium secondary battery according to the present disclosure includes a cathode current collector; and a cathode composite layer formed on the cathode current collector, wherein the cathode composite layer includes a first cathode composite layer on a side of the cathode current collector, and a second cathode composite layer on a surface side of the cathode composite layer, wherein the first cathode composite layer includes a first cathode active material of lithium transition metal composite oxide particles in forms of secondary particles in which primary particles are aggregated, and a binder, wherein the second cathode composite layer includes a second cathode active material of lithium transition metal composite oxide particles in forms of single particles, and a binder.

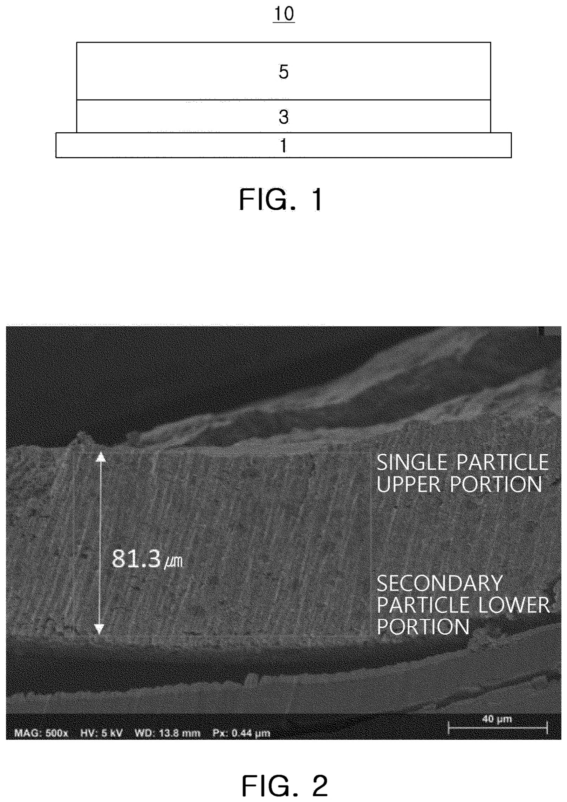

A cross-section of a cathode for a lithium secondary battery according to an embodiment of the present disclosure is schematically illustrated in FIG. 1. As illustrated in FIG. 1, a cathode 10 may be a multilayer cathode, in which a first cathode composite layer 3 is formed on at least one surface of a cathode current collector 1, and a second cathode composite layer 5 is formed on the first cathode composite layer. FIG. 1 illustrates an example in which the cathode composite layer is formed on only one surface of the current collector, but is not limited thereto, and cathode composite layers may be formed on both surfaces of the current collector.

The cathode current collector may include stainless steel, nickel, aluminum, titanium, or alloys thereof. The cathode current collector may also include aluminum surface-treated with carbon, nickel, titanium, or silver, or stainless steel surface-treated with carbon, nickel, titanium, or silver. Furthermore, the cathode current collector may be a polymer substrate coated with a conductive metal such as nickel, aluminum, titanium, and silver.

The cathode current collector may take various forms, including, but not limited to, a foil, a foam, a net, a porous material, a non-woven fabric, or the like. Additionally, the cathode current collector may have a thickness of, for example, 10 to 50 µm, but is not limited thereto.

The cathode current collector may include a first cathode composite layer and a second cathode composite layer. The first and second cathode composite layers may include a first cathode active material in forms of secondary particles in which primary particles are aggregated, and a second cathode active material in forms of single particles, as a cathode active material. The first and second cathode active materials may be lithium transition metal composite oxide particles.

The lithium transition metal composite oxide may include a compound capable of reversibly intercalating and deintercalating lithium ions.

According to example embodiments, the cathode active material may include a lithium-nickel metal oxide. The lithium-nickel metal oxide may further include at least one of cobalt (Co), manganese (Mn), or aluminum (Al).

In some embodiments, the cathode active material or the lithium-nickel metal oxide may include a layered structure or a crystal structure represented by the following Chemical Formula 1:

[Chemical Formula 1] LiₓNiₐM_{b}O_{2+z}

In Chemical Formula 1, 0.9≤x≤1.2, 0.5≤a≤0.99, 0.01≤b≤0.5, and -0.5 ≤z≤0.1 may be satisfied. As described above, M may include Co, Mn, and/or Al.

The chemical structure represented by Chemical Formula 1 may represent a bonding relationship in the layered structure or the crystal structure of the cathode active material, and may not exclude other additional elements. For example, M may include Co and/or Mn, and Co and/or Mn may serve as a main active element of the cathode active material together with Ni. Chemical Formula 1 may be provided to express the bonding relationship of the main active element, and should be understood as encompassing introduction and substitution of additional elements.

In an embodiment, auxiliary elements may be further included to enhance chemical stability of the cathode active material or the layered/crystal structure in addition to the main active element. The auxiliary elements may be incorporated into the layered/crystal structure to form bonds, and in this case, they should be understood to fall within the chemical structure represented by Chemical Formula 1.

The auxiliary elements may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary elements may also function as auxiliary active elements, such as Al, together with Co or Mn, contributing to the capacity/output activity of the cathode active material.

For example, the cathode active material or the lithium-nickel metal oxide may include a layered structure or a crystal structure represented by Chemical Formula 1-1 below:

[Chemical Formula 1-1] LiₓNiₐM1_{b1}M2_{b2}O_{2+z}

In Chemical Formula 1-1, M1 may include Co, Mn, and/or Al. M2 may include the auxiliary elements described above. In Chemical Formula 1-1, 0.9≤ x≤1.2, 0.5≤a≤0.99, 0.01≤b1+b2≤0.5, and -0.5≤z≤0.1 may be satisfied.

The cathode active material may further include a coating element or a doping element. For example, elements substantially identical to or similar to the auxiliary elements described above may be used as the coating element or the doping element. For example, the elements may be used alone or in combination of two or more.

The coating element or doping element may be present on a surface of the lithium-nickel metal oxide particle, or may penetrate through the surface of the lithium-nickel metal oxide particle, to be included in the bonding structure represented by Chemical Formula 1 or Chemical Formula 1-1.

The cathode active material may include a nickel-cobalt-manganese (NCM)-based lithium oxide. In this case, the NCM-based lithium oxide with an increased nickel amount may be used.

Ni may serve as a transition metal associated with output and capacity of a lithium secondary battery. Therefore, by incorporating a high-Ni composition into the cathode active material as described above, a high-capacity cathode and a high-capacity lithium secondary battery may be provided.

However, as the Ni amount increases, long-term storage stability or lifespan stability of the cathode or the secondary battery may be relatively reduced, and side reactions with the electrolyte may also increase. However, according to example embodiments, inclusion of Co may maintain electrical conductivity, while inclusion of Mn may improve lifespan stability and capacity retention characteristics.

The Ni amount (e.g., a mole fraction of nickel among total moles of nickel, cobalt, and manganese) in the NCM-based lithium oxide may be 0.5 or more, 0.6 or more, 0.7 or more, or 0.8 or more. In some embodiments, the Ni amount may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, a Mn-rich-based active material, a Li-rich layered oxide (LLO)/over-lithiated oxide (OLO)-based active material, or a Co-less-based active material having a chemical structure or a crystal structure represented by Chemical Formula 2.

[Chemical Formula 2] p[Li₂MnO₃] · (1-p) [Li_{q}JO₂]

In Chemical Formula 2, 0<p<1, 0.9≤q≤1.2, and J may include at least one element selected from Mn, Ni, Co, Fe, Cr, V, Cu, Zn, Ti, Al, Mg, and B.

The term "forms of single particles" as used herein may be used to exclude, for example, secondary particles formed by agglomeration of a plurality of primary particles. For example, secondary particle structures in which primary particles (e.g., more than 10, 20, 30, 40, 50, or the like.) are assembled or aggregated in the lithium transition metal oxide may be excluded.

Furthermore, the term "forms of single particles" as used herein may not exclude, for example, forms of single particles in which 2 to 10 single particles are simply attached or contacted without aggregation to form a single body.

When the cathode for a lithium secondary battery includes a lithium transition metal oxide in forms of single particles, energy density, cycle performance, high-temperature storage performance, or the like of the secondary battery may be improved.

In example embodiments of the present disclosure, the first cathode composite layer may include a first cathode active material of lithium transition metal composite oxide particles in forms of secondary particles in which primary particles are aggregated, and the second cathode composite layer may include a second cathode active material of lithium transition metal composite oxide particles in forms of single particles.

For example, the secondary particle may refer to a particle formed by agglomeration of a plurality of primary particles and substantially considered or observed as a single particle. For example, the secondary particle may be formed by agglomeration of more than 10, 30 or more, 50 or more, or 100 or more of primary particles.

For example, the single particle may refer to a particle (monolith) that may be distinct from the secondary particle, and may not be an aggregate. However, the single particle does not exclude a form in which fine particles (e.g., particles having a volume of 1/100 or less of the volume of the single particle) are attached to a particle surface.

For example, the single particles may be in contact with each other. A form in which the single particles are in contact with each other and a form of the secondary particles may be distinguished from each other and confirmed through SEM images. For example, 2 to 10 single particles may be in contact with each other.

For example, the secondary particles and the single particles may be distinguished based on a particle morphology. For example, the particles may be distinguished based on a cross-sectional image of the particle measured using a scanning electron microscope (SEM). As another example, whether the lithium transition metal oxide has a single particle form may be distinguished based on an ion image obtained by analyzing a cross-section of an active material particle using a focused ion beam (FIB). For example, when the particle has a polycrystalline structure, even when it is observed as a single particle in a SEM cross-sectional image, an FIB analysis image may reveal two or more single crystals, each composed of two or more crystals, depending on a difference in crystal orientation. Therefore, when two or more single crystals due to the difference in crystal orientation are not observed in the FIB analysis image, the active material particle may be determined to have a single particle form.

The particles may not be crystallographically distinguished. Therefore, the primary particle and the single particle may be either single crystals or polycrystalline.

The lithium transition metal composite oxide particles may be either single crystal particles or polycrystalline particles. The single crystal particles and polycrystalline particles may be determined from the geometrical shape observed by a scanning electron microscope (SEM), and the single crystal particles may be crystallites.

The lithium transition metal composite oxide particles of the single crystal particles may include particles having an ideal, perfectly crystalline state, as well as crystal particles having lattice defects.

The second cathode active material in the form of a single particle may have a particle diameter of 1.5 µm or greater, and more specifically, a particle diameter of 2.0 µm or greater and 6.0 µm or less. The first cathode active material in the form of secondary particles formed by agglomeration of primary particles may have a primary particle diameter of less than 1.5 µm, and more specifically, a particle diameter of 0.5 µm or greater and 1.0 µm or less. The particle diameter may be expressed as the longest diameter, and may be measured from an image obtained by observation using a scanning electron microscope (SEM).

The first cathode composite layer may include a first cathode active material in forms of secondary particles in which primary particles are aggregated. The first cathode active material having forms of secondary particles in which primary particles are aggregated, has weaker mechanical strength than the second cathode active material having forms of single particles. However, by including the first cathode active material formed by secondary particles formed by agglomerating primary particles in the first cathode composite layer on a side of the current collector, occurrence of cracks in the first cathode active material caused by a rolling roll during a rolling process during a cathode manufacturing process may be suppressed, thereby extending a lifespan of the electrode.

Furthermore, the first cathode active material having forms of secondary particles in which primary particles are aggregated may be disposed in the first cathode composite layer to improve initial efficiency. The first cathode active material having forms of secondary particles in which primary particles are aggregated may include secondary particles formed by agglomerating primary particles with a particle diameter of less than 1.5 µm. The primary particles included in the first cathode active material having forms of secondary particles in which primary particles are aggregated, may have small particle diameters and thus low diffusivity, contributing to improved initial efficiency. The cathode active material included in the first cathode composite layer may be a first cathode active material having forms of secondary particles in which primary particles are aggregated, and, as needed, may further include a second cathode active material having forms of single particles. The first cathode composite layer may include, but is not limited to, 50 to 98 wt% of the cathode active material.

When the first cathode composite layer includes a second cathode active material having forms of single particles, the second cathode active material may be included in a smaller amount than the first cathode active material. The second cathode active material included in the first cathode composite layer may, but is not limited to, be 49 wt% or less, for example, 1 to 49 wt%, based on a total weight of the first and second cathode active materials included in the first cathode composite layer. When the second cathode active material included in the first cathode composite layer exceeds this range, and is excessively included, an amount of the first cathode active material may decrease to reduce initial efficiency.

The second cathode composite layer may include a second cathode active material having forms of single particles. As described above, the second cathode active material having forms of single particles may have higher mechanical strength than the first cathode active material having forms of secondary particles in which primary particles are aggregated. Therefore, the second cathode active material having forms of single particles may be disposed on a surface of the cathode, to prevent occurrence of cracks in the first cathode active material, even when pressure is applied by a rolling roll during a rolling process during a cathode manufacturing process, thereby extending an overall lifespan of the electrode.

The cathode active material included in the second cathode composite layer may be a second cathode active material having forms of single particles, and, as needed, may further include a first cathode active material having forms of secondary particles in which primary particles are aggregated. The second cathode composite layer may include, but is not limited to, 50 to 98 wt% of the cathode active material.

When the second cathode composite layer includes a first cathode active material having forms of secondary particles in which primary particles are aggregated, the first cathode active material may be included in a smaller amount than the second cathode active material. The first cathode active material included in the second cathode composite layer may include, but is not limited to, 49 wt% or less, for example, 1 to 49 wt%, based on a total weight of the first and second cathode active materials included in the second cathode composite layer. When the first cathode active material included in the second cathode composite layer exceeds this range, and is excessively included, the first cathode active material may be exposed to the rolling roll during the rolling process, which may occur cracks, resulting in reduced capacity and reduced lifespan.

The first cathode composite layer and the second cathode composite layer may include a binder. The binder may be suitably used in a cathode according to an embodiment of the present disclosure, as long as a binder is commonly used in a cathode of a secondary battery, and examples thereof may include, but is not limited to, polyvinylidene fluoride (PVDF), a vinylidene fluoride-hexafluoropropylene copolymer, polyacrylonitrile, polymethylmethacrylate, acrylonitrile butadiene rubber (NBR), polybutadiene rubber (BR), styrene-butadiene rubber (SBR), or the like.

A cathode of each embodiment provided in the present disclosure may be used as a cathode of a secondary battery including an aqueous electrolyte or a non-aqueous electrolyte, and may also be used as a cathode of an all-solid-state battery. When the cathode is used as the cathode of an all-solid-state battery, the cathode composite layer, including the first cathode composite layer and the second cathode composite layer, may include a solid electrolyte, as needed.

The solid electrolyte may be an oxide-based solid electrolyte or a sulfide-based solid electrolyte.

The oxide-based solid electrolyte may include, but is not limited to, a perovskite-type oxide, a garnet-type oxide, an oxide having a NASICON structure, or the like.

In example embodiments, the perovskite-type oxide may include, for example, lithium lanthanum titanate or lithium lanthanum niobate (LiₓLa_{(1-x)/3}NbO₃) (0≤x≤1).

Furthermore, in example embodiments, the garnet-type oxide may be an oxide containing lithium, lanthanum, zirconium, and oxygen, and represented by Chemical Formula Li_{7-3x+y-z}AₓLa_{3-y}B_{y}Zr_{2-z}M_{z}O₁₂. In Chemical Formula above, 0<x ≤ 1, 0 ≤ y ≤1, 0<z ≤ 1, A is a substitution doping element of Li, B is a substitution doping element of La, M is a substitution doping element of Zr, and A and B may each independently be at least one selected from the group consisting of aluminum (Al), gallium (Ga), barium (Ba), magnesium (Mg), calcium (Ca), strontium (Sr), potassium (K), cerium (Ce), and rubidium (Rb), and M may be at least one selected from the group consisting of molybdenum (Mo), tungsten (W), antimony (Sb), yttrium (Y), niobium (Nb), and tantalum (Ta). The garnet-type oxide may include, but is not limited to, Li₇La₃Zr₂O₁₂, Li₅La₃Nb₂O₁₂, Li₅La₃Ta₂O₁₂, and Li₆La₂BaTa₂O₁₂, for example.

In example embodiments, the oxide having a NASICON structure may include at least one selected from the group consisting of LAGP (Li₁₊ₓAlₓGe₂₋ₓ(PO₄)₃(0≤x≤1)), LATP (Li₁₊ₓAlₓTi₂₋ₓ(PO₄)₃(0≤x≤1)), and LZP (Li₁₊₄ₓZr₂₋ₓ(PO₄)₃(0 ≤x≤0.4)).

In example embodiments, the sulfide-based solid electrolyte may include at least one selected from the group consisting of, for example, Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S_{S}-LiI, Li₂S-B₂S₃, Li₂S-P₂S₅-ZmSn (m and n are positive numbers, Z is one of Ge, Zn or Ga), Li₂S-GeS₂, Li₂S-SiS₂-Li₃PO₄, Li₂S-SiS₂-LiₚMO_{q} (p and q are positive numbers, M is one of P, Si, Ge, B, Al, Ga, or In), Li₇₋ₓPS₆₋ₓClₓ(0 ≤ x ≤ 2), Li₇₋ₓPS₆₋ₓBrₓ(0 ≤ x ≤ 2), and Li₇₋ₓPS₆₋ₓIₓ(0 ≤ x ≤ 2), but is not particularly limited thereto.

In example embodiments, the sulfide-based solid electrolyte may be an argyrodite type, and the argyrodite-type sulfide-based solid electrolyte may be represented by the following Chemical Formula 3.

[Chemical Formula 3] Li⁺₁₂₋ₙ₋ₓAⁿ⁺X²⁻₆₋ₓY⁻ₓ

In Chemical Formula 3, A is P, As, Ge, Ga, Sb, Si, Sn, Al, In, Ti, V, Nb, or Ta; X is S, Se, or Te; Y is Cl, Br, I, F, CN, OCN, SCN, or N₃; 1≤n≤5, and 0≤x≤2.

The sulfide-based solid electrolyte may be, for example, an argyrodite-type sulfide-based solid electrolyte including at least one selected from Li₇₋ₓPS₆₋ₓClₓ(0≤x≤2), Li₇₋ₓPS₆₋ₓBrₓ(0≤x≤2), and Li₇₋ₓPS₆₋ₓIₓ(0≤x≤2). In an embodiment, the sulfide-based solid electrolyte may be an argyrodite-type sulfide-based solid electrolyte including at least one selected from, for example, Li₆PS₅Cl, Li₆PS₅Br, and Li₆PS₅I. The argyrodite-type sulfide-based solid electrolyte may have excellent hardness, such that fine dispersion of the solid electrolyte may not occur during a mixing process for electrode formation, thereby suppressing additional side reactions with a solvent and a binder and ensuring structural stability of the solid electrolyte.

In example embodiments, a particle size of the sulfide-based solid electrolyte may be about 10 µm or less. By having a particle size in the range, a composite anode having excellent dispersibility and a uniform surface may be provided.

According to an embodiment of the present disclosure, a cathode may, but is not limited to, independently include 5 to 50 wt% of the solid electrolyte included in each of the first and second cathode composite layers, more specifically, 10 to 50 wt%, or 10 to 30 wt%.

A cathode for a lithium secondary battery according to the present disclosure may further include a third cathode composite layer between the first cathode composite layer and the second cathode composite layer. The third cathode composite layer may include at least one of the first cathode active material or the second cathode active material. For example, the third cathode composite layer may include a first cathode active material having forms of secondary particles in which primary particles are aggregated, and may include a smaller amount of the first cathode active material included in the first cathode composite layer. Furthermore, the third cathode composite layer may include a second cathode active material having forms of single particles, and may include a smaller amount of the second cathode active material included in the second cathode composite layer. Furthermore, the third cathode composite layer may include a first cathode active material and a second cathode active material. The first cathode active material included in the third cathode composite layer may be included in a smaller amount than the first cathode active material included in the first cathode composite layer, and the second cathode active material included in the third cathode composite layer may be included in a smaller amount than the second cathode active material included in the second cathode composite layer.

For example, the third cathode composite layer may include 1 to 49 wt% of the first cathode active material, and may include 1 to 49 wt% of the second cathode active material. When a lithium secondary battery cathode further includes the third cathode composite layer, a more uniform ion conductivity network may be provided in the lithium secondary battery, thereby further improving fast-charging performance.

The third cathode composite layer may be a single layer or may be two or more multilayers. When the third cathode composite layer is a multilayer structure, a binder amount may be higher toward the first cathode composite layer, and may be lower toward the second cathode composite layer. Therefore, among the third cathode composite layers, a layer closer to the first cathode composite layer may have a higher binder amount than a layer closer to the second cathode composite layer. For example, the binder amount of the third cathode composite layer may gradually decrease from the first cathode composite layer toward the second cathode composite layer. In another example, the binder amount of the cathode composite layer may be highest in the first cathode composite layer and lowest in the second cathode composite layer, and thus the binder amount may decrease from the cathode current collector toward a surface.

Furthermore, when the third cathode composite layer is a multilayer structure, an amount of the first cathode active material included in the third cathode composite layer may decrease from the first cathode composite layer toward the second cathode composite layer, and an amount of the second cathode active material included in the third cathode composite layer may increase from the first cathode composite layer toward the second cathode composite layer. For example, the cathode composite layer may have the largest amount of the first cathode active material in the first cathode composite layer and the smallest amount of the first cathode active material in the second cathode composite layer, and thus the amount of the first cathode active material may decrease from a side of the cathode current collector toward a side of the surface. In addition, the cathode composite layer may have the largest amount of the second cathode active material in the second cathode composite layer and the smallest amount of the second cathode active material in the first cathode composite layer, and thus the amount of the second cathode active material may decrease from the side of the surface toward the side of the cathode current collector.

The increasing and decreasing trends in the binder amount, the amount of the first cathode active material, and the amount of the second cathode active material may be independent of each other, and two or more may be combined.

Thicknesses of the first cathode composite layer and the second cathode composite layer included in the cathode are not particularly limited. However, in an embodiment, the second cathode composite layer may be thicker than the first cathode composite layer. A thicker second cathode composite layer than the first cathode composite layer may provide an effect of facilitating coating of an upper layer. For example, the first cathode composite layer and the second cathode composite layer may have a thickness ratio of 1:2 to 1:15, specifically 1:5 to 1:15, and more specifically 1:7 to 1:13.

When necessary, the cathode composite layer including the first cathode composite layer, the second cathode composite layer, and the third cathode composite layer may include a solid electrolyte. The solid electrolyte may be an oxide-based solid electrolyte or a sulfide-based solid electrolyte, and specific examples of each thereof may be as described above.

The cathode composite layer may, when necessary, include a conductive agent, and may further include a thickener or the like.

The conductive agent may be added to enhance conductivity of the cathode composite layer and/or mobility of lithium ions or electrons. The conductive agent may include, but is not limited to, a carbon-based conductive agent such as graphite, carbon black, acetylene black, Ketjen black, graphene, carbon nanotubes, vapor-grown carbon fiber (VGCF), carbon fiber, or the like, and/or a metal-based conductive agent including tin, tin oxide, perovskite materials such as titanium oxide, LaSrCoO₃, and LaSrMnO₃, or the like.

When necessary, the cathode composite layer may further include a thickener and/or a dispersant, or the like. In an embodiment, the cathode composite layer may include a thickener such as carboxymethyl cellulose (CMC).

Another embodiment of the present disclosure relates to a method for manufacturing a cathode for a lithium secondary battery. The method for manufacturing a cathode for a lithium secondary battery, according to the present disclosure, may include forming a first cathode composite layer using a first cathode slurry including a first cathode active material, which is lithium transition metal composite oxide particles having forms of secondary particles in which primary particles are aggregated, and a binder, and forming a second cathode composite layer on the first cathode composite layer using a second cathode slurry including a second cathode active material, which is lithium transition metal composite oxide particles having forms of single particles, and a binder.

The binder may be included in a greater amount in the first cathode slurry than in the second cathode slurry, based on a weight percent value. By including a greater proportion of the binder in the first cathode slurry, bonding strength with a current collector may be improved. The binder may be included in the second cathode slurry at a smaller ratio, the binder may be suppressed from migrating to the upper layer of the cathode during the drying process during cathode manufacturing, which may cause non-uniform distribution of the binder, and may suppress movement of ions and electrons.

A binder amount included in the first cathode slurry is not limited thereto, but may be, for example, less than 5.0 wt%, more specifically, 1.0 wt% or more and less than 5.0 wt%, and more specifically, 2.5 wt% or more to less than 5.0 wt%, 3.5 wt% or more to less than 5.0 wt%, 1.0 wt% or more to 4.9 wt% or less, 2.5 wt% or more to 4.9 wt% or less, or 3.5 wt% or more to 4.9 wt% or less, based on a total weight of the first cathode slurry.

A binder amount included in the second cathode slurry is not limited thereto, but may be, for example, 0.5 to 3.5 wt% based on a total weight of the second cathode slurry, and more specifically, 0.5 to 2.0 wt%, or 2.0 to 3.5 wt%.

The binder amounts included in the first cathode slurry and the second cathode slurry are not particularly limited as long as the first cathode slurry contains a larger proportion of the binder in the content range described above. However, for example, a ratio of weight % values of the binder included in the first cathode slurry and the binder included in the second cathode slurry may be 1.0 to 5.0:0.5 to 3.5, and more specifically, 3.5 to 5.0:0.5 to 2.0.

The first and second cathode slurries may include the cathode active material, the binder, and optionally, solid electrolyte particles, and, furthermore, may further include additives such as a conductive agent, a thickener, a dispersant, and the like. The cathode slurry may be prepared by mixing a solid component, as described above, with a solvent.

The solvent may include, but is not limited to, N-methyl-2-pyrrolidone (NMP), dimethylformamide, dimethylacetamide, N,N-dimethylaminopropylamine, ethylene oxide, tetrahydrofuran, butyl butyrate, toluene, xylene, or the like.

The first cathode composite layer and the second cathode composite layer may be formed by applying the first cathode slurry onto a cathode current collector and applying the second cathode slurry onto the first cathode composite layer. The coating may be performed by methods such as gravure coating, slot die coating, multi-layer simultaneous die coating, imprinting, doctor blade coating, dip coating, bar coating, casting, transfer, or the like, and is not particularly limited thereto.

For example, a first cathode slurry may be coated on a cathode current collector, and a second cathode slurry may be coated on the first cathode slurry coated on the cathode current collector. The second cathode slurry may be coated before the first cathode slurry is dried, and may be dried simultaneously to form a first cathode composite layer and a second cathode composite layer, or the second cathode slurry may be coated after the first cathode slurry is dried to form the first cathode composite layer. More specifically, a first cathode slurry may be applied, a second cathode slurry may be applied before drying, and then dried simultaneously to manufacture a cathode having a first cathode composite layer and a second cathode composite layer. The cathode manufactured thereby may improve manufacturing processability of the cathode and further improve expression capacity of the cathode or the like, thereby further improving cathode performance.

After forming the first cathode composite layer and the second cathode composite layer, a rolling process may be performed to obtain a cathode having a predetermined electrode density.

According to another embodiment of the present disclosure, a lithium secondary battery including the cathode for a lithium secondary battery described above may be provided. For example, a lithium secondary battery according to the present disclosure may include the cathode of any one of the embodiments, and may also include an anode, and a separator may be interposed between the cathode and the anode. Furthermore, a secondary battery according to another embodiment may be an all-solid-state secondary battery including the cathode and the anode of any one of the embodiments, and a solid electrolyte membrane between the cathode and the anode.

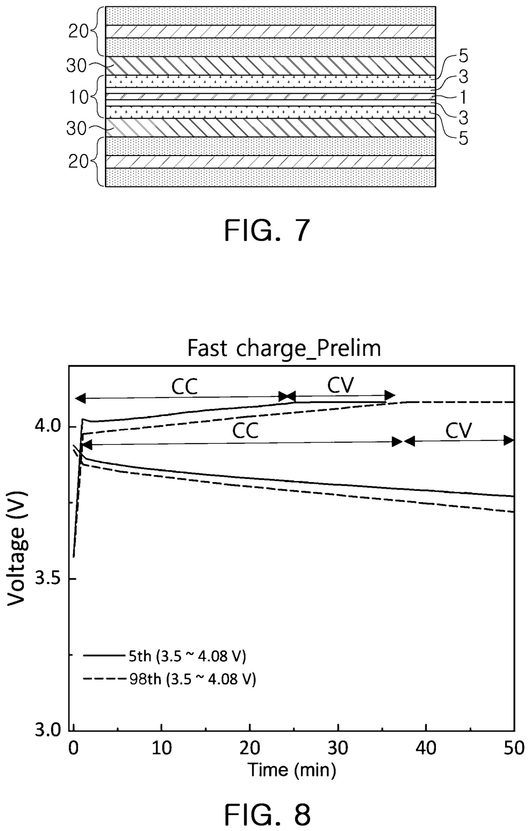

An example of the all-solid-state secondary battery is schematically illustrated in FIG. 7. As illustrated in FIG. 7, a solid electrolyte membrane 30 may be included between a cathode 10 and an anode 20. In the cathode 10, a first cathode composite layer 3 may be formed on both surfaces of a cathode current collector 1, and a second cathode composite layer 5 may be formed on the first cathode composite layer 3.

The solid electrolyte membrane may be manufactured or used with reference to a known manufacturing method, and is not particularly limited as long as it is used in a lithium secondary battery.

The anode may include an anode current collector and an anode composite layer formed on at least one surface of the anode current collector.

The anode current collector may include stainless steel, copper, nickel, titanium, or an alloy thereof. The anode current collector may also include copper surface-treated with carbon, nickel, titanium, or silver, or stainless steel surface-treated with carbon, nickel, titanium, or silver. Additionally, the anode current collector may be a polymer substrate coated with a conductive metal such as nickel, aluminum, titanium, or silver.

The anode current collector may take various forms, including, but not limited to, a foil, a foam, a net, a porous material, a non-woven fabric, or the like. Furthermore, the anode current collector may have a thickness of 8 to 50 µm, but is not limited thereto.

The anode composite layer may include an anode active material. The anode active material may be a material capable of adsorbing and desorbing lithium ions. For example, the anode active material may include a carbon-based material such as crystalline carbon, amorphous carbon, carbon composites, carbon fibers, and the like; lithium metal; a lithium alloy; a silicon (Si)-containing material; a tin (Sn)-containing material, or the like.

Examples of the amorphous carbon may include hard carbon, soft carbon, coke, mesocarbon microbeads (MCMB), mesophase pitch-based carbon fibers (MPCF), or the like.

Examples of the crystalline carbon may include graphitic carbons such as natural graphite, artificial graphite, graphitized coke, graphitized MCMB, graphitized MPCF, or the like.

The lithium metal may be pure lithium metal or a lithium metal with a protective layer formed thereon to suppress dendrite growth, or the like. In an embodiment, a lithium metal-containing layer deposited or coated on the anode current collector may be used as the anode composite layer. In another embodiment, a lithium thin film layer may be used as the anode composite layer.

Elements included in the lithium alloy may include aluminum, zinc, bismuth, cadmium, antimony, silicon, lead, tin, gallium, indium, or the like.

The silicon-containing material may provide enhanced capacity characteristics. The silicon-containing material may include Si, SiOₓ (0<x<2), metal-doped SiOₓ (0<x<2), a silicon-carbon composite, or the like. The metal may include lithium and/or magnesium, and the metal-doped SiOₓ (0<x<2) may include a metal silicate.

The anode composite layer may include a binder. Examples of the binder may include, but is not limited to, polyvinylidene fluoride (PVDF), a vinylidene fluoride-co-hexafluoropropylene copolymer (poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR), or the like. In an embodiment, a styrene-butadiene rubber (SBR)-based binder, a carboxymethyl cellulose (CMC)-based binder, a polyacrylic acid-based binder, a poly (3,4-ethylenedioxythiophene (PEDOT)-based binder, or the like may be used as the anode binder.

The binder may be included in an amount of about 0.5 to about 5 wt% based on a total weight of the anode composite layer.

The anode composite layer may include a conductive material. The conductive material may be added to enhance conductivity of the anode composite layer and/or mobility of lithium ions or electrons. For example, the conductive material may include, but is not limited to, a carbon-based conductive agent such as graphite, carbon black, acetylene black, Ketjen black, graphene, carbon nanotubes, vapor-grown carbon fiber (VGCF), carbon fiber, or the like, and/or a metal-based conductive agent including tin, tin oxide, perovskite materials such as titanium oxide, LaSrCoO₃, and LaSrMnO₃, or the like.

In an embodiment, the conductive agent may be included in an amount of about 0.05 to about 5 wt% based on the total weight of the anode composite layer.

The anode composite layer may further include a thickener and/or a dispersant, or the like, as needed. In an embodiment, the anode composite layer may include a thickener such as carboxymethyl cellulose (CMC).

An anode including the anode composite layer may be used as an anode of a non-aqueous electrolyte secondary battery or as an anode of an all-solid-state battery. When used as the anode of an all-solid-state battery, the anode composite layer may include solid electrolyte particles. The solid electrolyte particles are not particularly limited, and any solid electrolyte included in the anode of an all-solid-state battery may be appropriately used. Specifically, the solid electrolyte included in the cathode composite layer may be used.

The anode may be manufactured by applying an anode slurry, which may be a mixture of the anode active material, a binder, and an additive, which may be added, as needed, with a solvent, onto an anode current collector, and drying the mixture.

The solvent may include, but is not limited to, water, pure water, deionized water, distilled water, ethanol, isopropanol, methanol, acetone, n-propanol, t-butanol, butyl butyrate, toluene, xylene, or the like.

A process of applying the anode slurry onto the anode current collector may be performed using, but is not limited to, gravure coating, slot die coating, multi-layer simultaneous die coating, imprinting, doctor blade coating, dip coating, bar coating, casting, transfer, or the like.

In some embodiments, the anode may include an anode composite layer of a lithium metal type formed through a deposition/coating process.

The separator may be configured to prevent electrical short-circuiting between the cathode and the anode, and to allow ion flow. Depending on an embodiment, a thickness of the separator may range from 10 µm to 40 µm, although the present disclosure is not limited thereto.

For example, the separator may include a porous polymer film or a porous nonwoven fabric. The porous polymer film may include an ethylene polymer, a propylene polymer, a polyolefin-based polymer such as an ethylene/butene copolymer, an ethylene/hexene copolymer, and an ethylene/methacrylate copolymer. The porous nonwoven fabric may include a high-melting-point glass fiber, a polyethylene terephthalate fiber, or the like. The separator may also include a ceramic-based material. For example, inorganic particles may be coated on a polymer film, or may be dispersed in the polymer film to improve heat resistance.

The separator may have a single-layer structure or a multi-layer structure including the polymer film and/or the nonwoven fabric, described above.

### Examples

The following provides further descriptions of embodiments of the present disclosure with reference to specific experimental examples. Inventive Examples and Comparative Examples included in the experimental examples may be examples of embodiments provided in the present disclosure and do not limit the scope of the patent claims.

### Inventive Example 1

### - Preparation of Cathode Slurry -

A first cathode slurry for forming a first cathode composite layer was prepared by mixing 80 wt% of a first cathode active material, which was NCM (Ni_{0.83}Co_{0.085}Mn_{0.085}), having forms of secondary particles in which primary particles were aggregated based on solid weight, 14.4 wt% of an argyrodite solid electrolyte, 1.5 wt% of a Super P conductive agent, and 4.1 wt% of a butadiene rubber (BR) binder in a butyl butyrate solvent, based on a weight of a solid component.

A second cathode slurry for forming a second cathode composite layer was prepared by mixing 80 wt% of a first cathode active material, which was NCM (Ni_{0.83}Co_{0.085}Mn_{0.085}), having forms of single particles, 17.75 wt% of an argyrodite solid electrolyte, 1.5 wt% of a Super P conductive agent, and 0.75 wt% of a butadiene rubber binder in a butyl butyrate solvent, based on a weight of a solid component.

Compositions of the first and second cathode slurries were illustrated in **Table 2.**

### - Preparation of Cathode -

The first cathode slurry was applied to both surfaces of an aluminum foil (thickness: 12 µm) as a cathode current collector, and then the second cathode slurry was applied to a coating layer of the first cathode slurry (direct casting). The first and second cathode slurries were applied at a ratio of 1:9.

The first and second cathode slurries were sequentially applied, then simultaneously dried and rolled (312 MPa) to form a first cathode composite layer on both surfaces of the cathode current collector, and a second cathode composite layer was formed on the first cathode composite layer, thereby manufacturing a multilayer cathode.

### - Analysis of Cathode -

A thickness of the cathode and a thickness ratio of the first and second cathode composite layers, manufactured above, were measured, and results therefrom were illustrated in **Table 2.**

The manufactured cathode was cut in a thickness direction, and a cross-section thereof was photographed using an SEM, as illustrated in **FIG. 2****.** An area indicated by a tetragonal box in **FIG. 2** represents a portion of the cross-section of the manufactured cathode, wherein an upper portion represents the second cathode composite layer, and a lower portion represents the first cathode composite layer. The cathode was manufactured by direct casting to firmly bond the first and second cathode composite layers, and a boundary between the layers was not clearly distinguished.

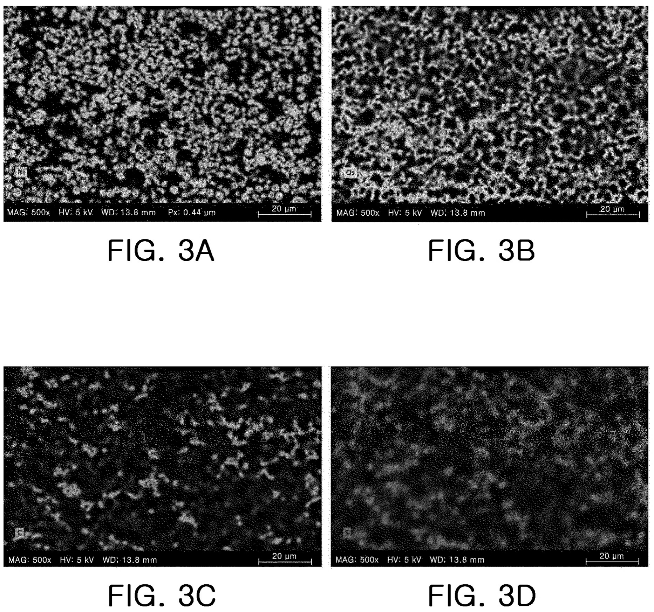

SEM-EDX analysis was performed on a cross-section of the manufactured cathode to analyze distribution of elements Ni, Os, C, and S. Images of the element distribution analysis results were illustrated in **FIGS. 3A to 3D****.** The SEM-EDX analysis may be performed using any of the following equipment: S-4800 and SU8230 from Hitachi, Nova NanoSEM 450 from FEI, and Apreo device from Thermo Fisher Scientific. FIG. 3A illustrates distribution of Ni included in an active material, allowing analysis of distribution of the active material. FIG. 3B illustrates distribution of Os by staining a binder with Os, allowing analysis of distribution of the binder. FIG. 3C illustrates distribution of carbon included in a conductive material and a binder, including carbon, allowing analysis of distribution of the binder and the conductive material, including carbon. Furthermore, FIG. 3 D illustrates distribution of S included in a solid electrolyte, allowing analysis of distribution of the solid electrolyte.

From **FIGS. 3A to 3D****,** it can be seen that, in addition to the active material, the binder, the conductive material, and the solid electrolyte are uniformly distributed, without variation, depending on a thickness of an electrode.

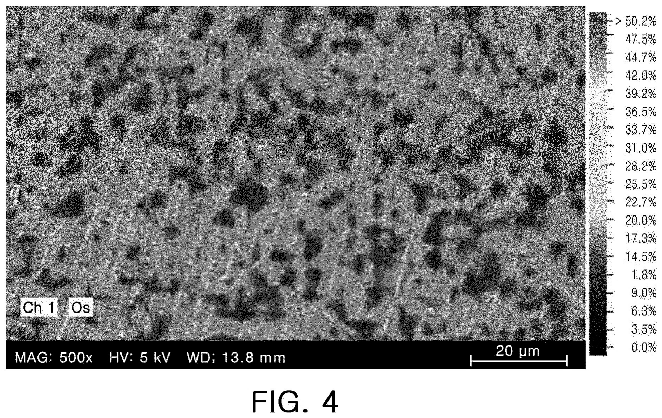

To further confirm distribution trend of a binder, distribution according to an Os concentration was illustrated in **FIG. 4****.** As can be seen from **FIG. 4****,** despite the fact that a first cathode slurry for forming a first cathode composite layer included a greater amount of binder, the binder was relatively uniformly distributed therethrough, without any concentration in lower or upper portions.

Specifically, although a significant amount of binder was disposed in the first cathode composite layer, representing 10% of a total thickness of the cathode composite layers, **FIG. 4** illustrates that the binder amount was not significantly distributed in a region in which the first cathode composite layer was formed. This can be interpreted as being due to binder migration to the upper portion of the cathode during a drying process. Despite the binder migration described above, the binder did not exhibit any concentration in the upper portion of the second cathode composite layer, which may be a surface of the cathode. From results, it can be seen that the binder was relatively uniformly distributed in the cathode, without any concentration in a specific location.

### - Preparation of Half-Cell and Rate Evaluation -

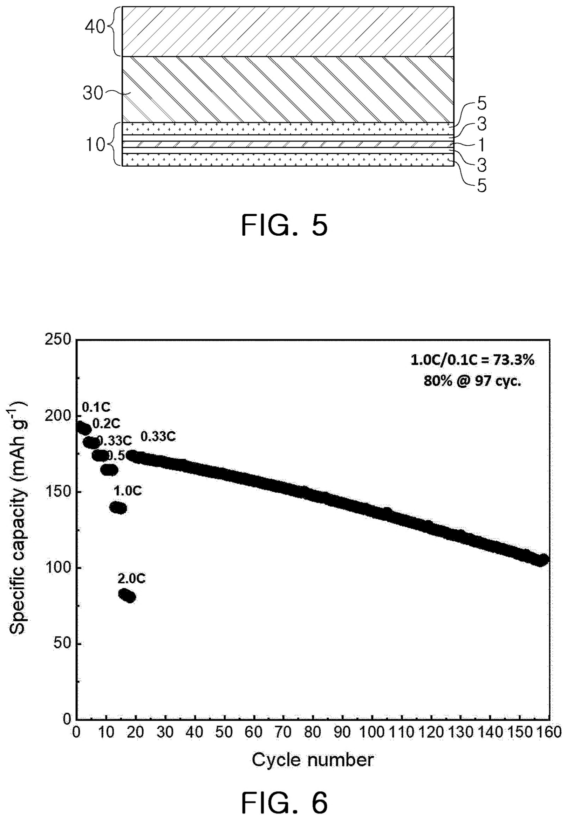

A secondary battery of a half-cell type was prepared by inserting a counter electrode 40 (100 µm), and an argyrodite solid electrolyte membrane 30 (1000 µm) between the cathode 10 and the counter electrode. A cross-section of the lithium secondary battery of a half-cell type was schematically illustrated in **FIG. 5****.**

The counter electrode may be a counter electrode composed of a Li-metal foil (thickness: 100 µm).

The secondary battery was charged and discharged to evaluate capacity retention thereof.

Specifically, the charging and discharging were performed at C-rates of 0.1 C, 0.2 C, 0.33 C, 0.5 C, 1.0 C, and 2.0 C to evaluate capacity retention characteristics thereof. Results therefrom were illustrated in **FIG. 6****.** Furthermore, capacity retention at 1.0 C relative to capacity at 0.1 C was illustrated in **FIG. 6** and **Table 2.**

Furthermore, changes in capacity depending on a cycle count were measured by charging and discharging at a 0.33 C-rate, and results therefrom were illustrated in **FIG. 6****.** Furthermore, cycle counts at which initial capacity reached 80% were illustrated in **Table 2.**

### - Preparation of Bi-Cell and Evaluation of Fast Charge Capacity Characteristics -

A secondary battery of a bi-cell type was prepared by disposing an anode 20 (70 µm) on both surfaces of the cathode 10, and inserting an argyrodite solid electrolyte membrane 30 (30 µm) between the cathode and the anode. A cross-section of the lithium secondary battery of a bi-cell type was schematically illustrated in **FIG. 7****.**

The anode was formed to have an anode composite layer including 64 wt% graphite, 16 wt% SiC, 15.0 wt% solid electrolyte, 4.0 wt% Super P conductive agent, and 1.0 wt% butadiene rubber (BR) on both surfaces of a copper foil (thickness: 10 µm).

The lithium secondary battery was charged and discharged at 0.1C for first four cycles and 1.7C for a fifth cycle. Charging/discharging cycles were performed under conditions illustrated in **Table 1.**

**[Table 1]**

| 1^{st} ~ 4^{th} Charging/Discharging | 5^{th} Charging/Discharging |
|---|---|
| 2.5 V ~ 4.2 V | 3.5 V ~ 4.08 V |
| C-rate: 0.1 C | C-rate: 1.7 C |

The charging/discharging cycles were performed under conditions of 10 MPa (Jig) pressure and 45°C.

Starting with 5^{th} cycle, fast charging was performed with a target charge time of 35 minutes (CC 26 minutes/CV 9 minutes). CC and CV times for 5^{th} and 98^{th} fast charge cycles were illustrated in **FIG. 8****.**

As seen from **FIG. 8****,** 98^{th} fast charge cycle required 35 minutes for CC and 15 minutes for CV. While a CC period accounted for 74% of a total charge time during 5^{th} fast charge, the CC period remained at 70% of the total charge time even after 98^{th} fast charge.

The lithium secondary battery of a bi-cell type was subjected to 98 fast charge and slow discharge tests at 45°C, each cycle consisting of 1.7C charge and 0.1C discharge. After the fast charge and the slow discharge, described above, 96 charge/discharge cycles were performed, each cycle consisting of 0.33C charge and 0.1C discharge.

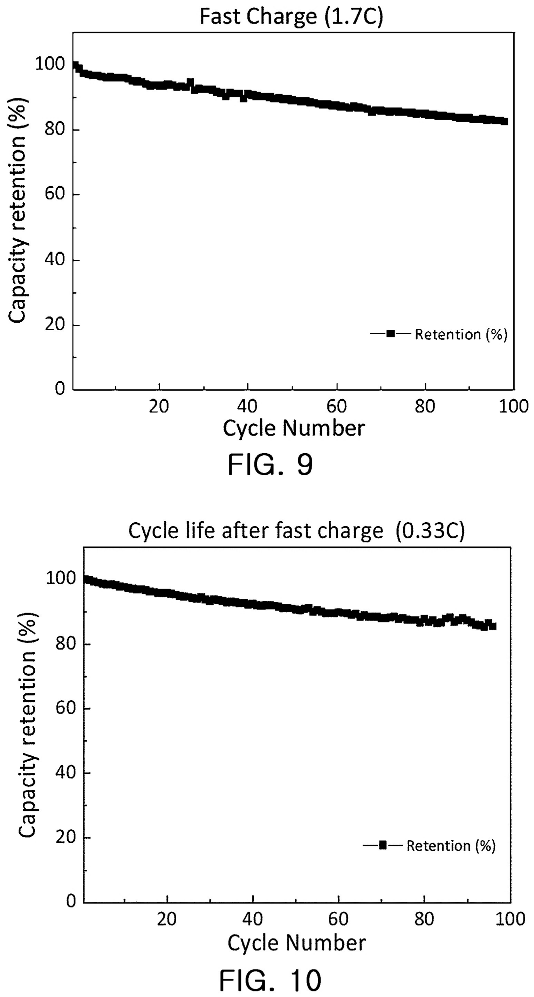

Changes in capacity retention rates following 1.7C fast charge and capacity retention rates following 0.33C charge were illustrated in **FIGS. 9 and 10****,** respectively.

As can be seen from **FIGS. 9 and 10****,** 1.7C fast charge exhibited 82.6% capacity retention after 98 cycles, while 0.33C charge exhibited 85.4% capacity retention, demonstrating excellent fast charge and lifespan characteristics.

### Comparative Example 1

A multilayer cathode was prepared using the same method as in Inventive Example 1, except that NCM having forms of single particles, used as the second cathode active material in Inventive Example 1, was used as a cathode active material in first and second cathode slurries. Compositions of the first and second cathode slurries were illustrated in **Table 2.**

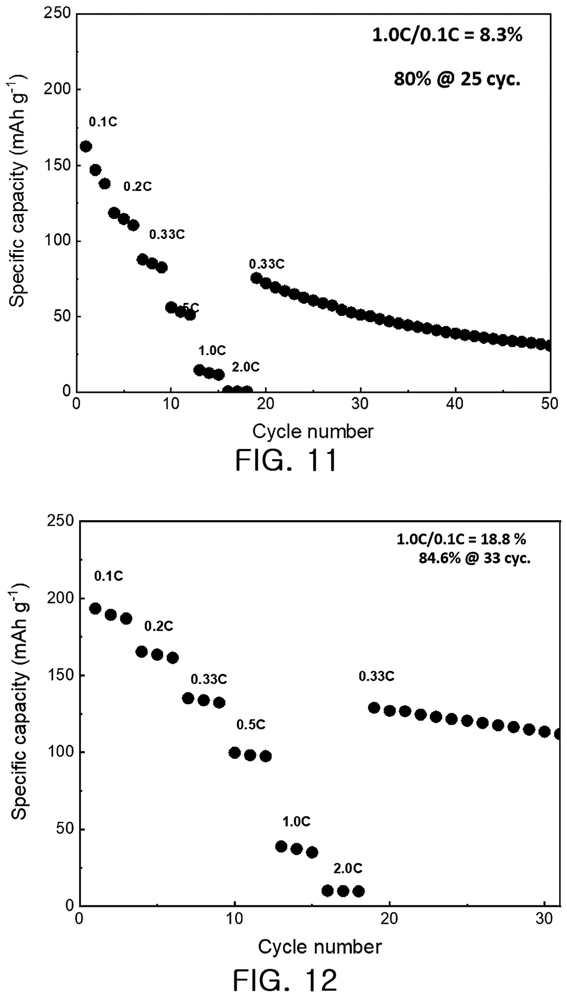

Using the cathode, a secondary battery of a half-cell type was prepared using the same method as in Inventive Example 1. The secondary battery was then charged and discharged using the same method as in Inventive Example 1 to evaluate capacity retention characteristics thereof. Results therefrom were illustrated in **FIG. 11****.** Furthermore, capacity retention at 1.0 C relative to capacity at 0.1 C was illustrated in **FIG. 11** and **Table 2.**

Furthermore, changes in capacity depending on a cycle count were measured by charging and discharging at a 0.33 C-rate, and results therefrom were illustrated in **FIG. 11****.** Furthermore, cycle counts at which initial capacity reached 80% were illustrated in **Table 2.**

### Comparative Example 2

A multilayer cathode was prepared using the same method as in Inventive Example 1, except that a binder amount in a first cathode slurry was adjusted from 4.1 wt% to 5.0 wt%. Compositions of first and second cathode slurries were illustrated in **Table 2.**

Using the cathode, a secondary battery of a half-cell type was prepared using the same method as in Inventive Example 1. The secondary battery was then charged and discharged to evaluate capacity retention characteristics thereof.

The secondary battery was charged and discharged using the same method as in Inventive Example 1 to evaluate capacity retention characteristics thereof, and results therefrom were illustrated in **FIG. 12****.** Furthermore, capacity retention at 1.0 C relative to capacity at 0.1 C was illustrated in **FIG. 12** and **Table 2.**

Furthermore, changes in capacity depending on a cycle count were measured by charging and discharging at a 0.33 C-rate, and results therefrom were also illustrated in **FIG. 12****.** Furthermore, cycle counts at which initial capacity reached 84.6% were illustrated in **Table 2.**

### Comparative Example 3

A multilayer cathode was prepared using the same method as in Inventive Example 1, except that NCM having forms of secondary particles in which primary particles are aggregated, used as the first cathode active material in Inventive Example 1, was used as a cathode active material in first and second cathode slurries. Compositions of the first and second cathode slurries were illustrated in **Table 2.**

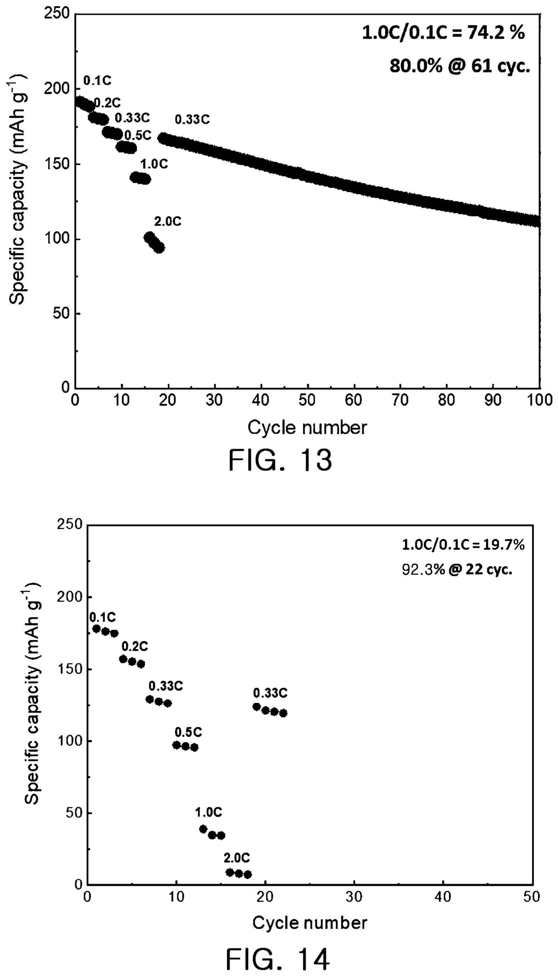

Using the cathode, a secondary battery of a half-cell type was prepared using the same method as in Inventive Example 1. The secondary battery was then charged and discharged using the same method as in Inventive Example 1 to evaluate capacity retention characteristics thereof. Results therefrom were illustrated in **FIG. 13****.** Furthermore, capacity retention at 1.0 C relative to capacity at 0.1 C was illustrated in **FIG. 13** and **Table 2.**

Furthermore, changes in capacity depending on a cycle count were measured by charging and discharging at a 0.33 C-rate, and results therefrom were illustrated in **FIG. 13****.** Furthermore, cycle counts at which initial capacity reached 80% were illustrated in **Table 2.**

### Comparative Example 4

A cathode was manufactured using the same method as Comparative Example 3, except that a first cathode slurry was applied to both surfaces of an aluminum foil and dried to form a first cathode composite layer, and then a second cathode slurry was applied onto the first cathode composite layer and dried to produce a multilayer cathode. Compositions of the first and second cathode slurries were illustrated in **Table 2.**

Using the cathode, a secondary battery of a half-cell type was prepared using the same method as in Inventive Example 1. The secondary battery was then charged and discharged using the same method as in Inventive Example 1 to evaluate capacity retention characteristics thereof. Results therefrom were illustrated in **FIG. 14****.** Furthermore, capacity retention at 1.0 C relative to capacity at 0.1 C was illustrated in **FIG. 14** and **Table 2.**

Furthermore, changes in capacity depending on a cycle count were measured by charging and discharging at a 0.33 C-rate, and results therefrom were illustrated in **FIG. 14****.** Furthermore, cycle counts at which initial capacity reached 92.3% were illustrated in **Table 2.**

**[Table 2]**

| Amount: wt% | | | Inventive Ex. 1 | Comparative Ex. 1 | Comparative Ex. 2 | Comparative Ex. 3 | Comparative Ex. 4 |
|---|---|---|---|---|---|---|---|
| 1st Slurry | 1st Cathode Active Material | Type | 2^{nd} Particles | Single Particles | 2^{nd} Particles | 2^{nd} Particles | 2^{nd} Particles |
| | | Amount | 80 | 80 | 80 | 80 | 80 |
| | Solid Electrolyte | | 14.4 | 14.4 | 13.5 | 14.4 | 14.4 |
| | Conductive Agent | | 1.5 | 1.5 | 1.5 | 1.5 | 1.5 |
| | Binder | | 4.1 | 4.1 | 5 | 4.1 | 4.1 |
| 2^{nd} Slurry | 2^{nd} Cathode Active Material | Type | Single Particles | Single Particles | Single Particles | 2^{nd} Particles | 2^{nd} Particles |
| | | Amount | 80 | 80 | 80 | 80 | 80 |
| | Solid Electrolyte | | 17.75 | 17.75 | 17.75 | 17.75 | 17.75 |
| | Conductive Agent | | 1.5 | 1.5 | 1.5 | 1.5 | 1.5 |
| | Binder | | 0.75 | 0.75 | 0.75 | 0.75 | 0.75 |
| Thickness (µm) | | | 81.4 | 81.4 | 81.4 | 81.4 | 81.4 |
| Thickness Ratio (1^{st} Layer:2^{nd} Layer) | | | 1:9 | 1:9 | 1:9 | 1:9 | 1:9 |
| Capacity Retention Rate (%) (1.0C/0.1C) | | | 73.30 | 8.3 | 18.8 | 74.2 | 19.7 |
| Cycle Number | | | 97 (Based on Capacity 80%) | 25 (Based on Capacity 80%) | 33 (Based on Capacity 84.6%) | 61 (Based on Capacity 80%) | 22 (Based on Capacity 92.3%) |

### Evaluation of Property

### - Comparison of Battery Performance of Inventive Example 1 and Comparative Examples 1 to 4 -

As illustrated in **FIG. 6** and **Table 2,** the lithium secondary battery of Inventive Example 1 was evaluated to exhibit an excellent capacity retention rate of 73.3% at 1.0C relative to capacity at 0.1C. Furthermore, it was evaluated that initial capacity reached 80% after 97 cycles of charge/discharge at a 0.33C rate.

As illustrated in **FIG. 11** and **Table 2,** it can be seen that capacity of the lithium secondary battery of Comparative Example 1 at 1.0C charge was only 8.3% of capacity at 0.1C charge, and, furthermore, it took only 25 cycles to decrease 80% of initial battery capacity at a 0.33C rate, demonstrating significantly inferior fast-charge performance and a significant decrease in capacity, resulting in a significantly shorter battery life.

As illustrated in **FIG. 12** and **Table 2,** it can be seen that capacity of the lithium secondary battery of Comparative Example 2 at 1.0C charge was only 18.8% of capacity at 0.1C charge, and, furthermore, it took only 33 cycles to decrease to 84.6% of initial battery capacity at a 0.33C rate, demonstrating significantly inferior fast-charge performance than Inventive Example 1, and a significant decrease in capacity than Inventive Example 1, resulting in a shorter battery life.

As illustrated in **FIG. 13** and **Table 2,** it was evaluated that capacity of the lithium secondary battery of Comparative Example 3 at 1.0 C charge was only 74.2% of capacity at 0.1C charge, indicating good fast-charge performance. However, it can be seen that it took only 61 cycles to decrease to 80% of initial battery capacity, illustrating a significant decrease in capacity than Inventive Example 1, resulting in a shorter battery life.

As illustrated in **FIG. 14** and **Table 2,** it can be seen that capacity of the capacity of the lithium secondary battery of Comparative Example 4 at 1.0C charge was only 19.7% of capacity at 0.1C charge, and, furthermore, it took only 22 cycles to decrease to 92.3% of initial battery capacity, demonstrating inferior fast-charge performance than Inventive Example 1, and a significant decrease in capacity than Inventive Example 1, resulting in a shorter battery life.

According to an embodiment of the present disclosure, fast-charging capability of a lithium secondary battery may be improved.

According to another embodiment of the present disclosure, lifespan characteristics of a lithium secondary battery may be improved.

A cathode for a lithium secondary battery of the present disclosure may be widely applied in green technology fields such as an electric vehicle, a battery charging station, and solar power generation, wind power generation, or the like using a battery, and the like. Furthermore, the cathode for a lithium secondary battery of the present disclosure may be used in eco-friendly electric vehicles, hybrid vehicles, other vehicles, or the like that prevent climate change by suppressing air pollution and greenhouse gas emissions.

Only specific examples of implementations of certain embodiments may be described. Variations, improvements and enhancements of the disclosed embodiments and other embodiments may be made based on the disclosure of this patent document.

The present disclosure may also relate to the following aspects.

Aspect 1) A cathode for a lithium secondary battery, comprising: a cathode current collector; and a cathode composite layer formed on the cathode current collector, wherein the cathode composite layer includes a first cathode composite layer on a side of the cathode current collector, and a second cathode composite layer on a surface side of the cathode composite layer, wherein the first cathode composite layer includes a first cathode active material of lithium transition metal composite oxide particles in forms of secondary particles in which primary particles are aggregated, and a binder, wherein the second cathode composite layer includes a second cathode active material of lithium transition metal composite oxide particles in forms of single particles, and a binder.

Aspect 2) The cathode of aspect 1, wherein the first cathode composite layer further includes a second cathode active material.

Aspect 3) The cathode of aspect 1 or 2, wherein the second cathode active material is included in an amount of 1 to 49 wt% relative to a total weight of the first cathode active material and the second cathode active material included in the first cathode composite layer.

Aspect 4) The cathode of one of aspects 1 to 3, wherein the second cathode composite layer further includes a first cathode active material.

Aspect 5) The cathode of aspect 4, wherein the first cathode active material is included in an amount of 1 to 49 wt% relative to a total weight of the first cathode active material and the second cathode active material included in the second cathode composite layer.

Aspect 6) The cathode of one of aspects 1 to 5, wherein a thickness of the second cathode composite layer is greater than a thickness of the first cathode composite layer.

Aspect 7) The cathode of aspect 6, wherein the first cathode composite layer and the second cathode composite layer have a thickness ratio of 1:2 to 1:15.

Aspect 8) The cathode of one of aspects 1 to 7, wherein the cathode composite layer further includes a third cathode composite layer between the first cathode composite layer and the second cathode composite layer, wherein the third cathode composite layer includes a first cathode active material and a second cathode active material.

Aspect 9) The cathode of aspect 8, wherein a first cathode active material amount of the third cathode composite layer is less than a first cathode active material amount of the first cathode composite layer, and a second cathode active material amount of the third cathode composite layer is less than a second cathode active material amount of the second cathode composite layer.

Aspect 10) The cathode of aspect 8 or 9, wherein the third cathode composite layer includes two or more layers, and among the two or more layers of the third cathode composite layer, a layer closer to the first cathode composite layer has a higher binder amount than a layer closer to the second cathode composite layer.

Aspect 11) The cathode of one of aspects 1 to 10, wherein the cathode composite layer further includes a solid electrolyte.

Aspect 12) A lithium secondary battery comprising the cathode of one of aspects 1 to 11, preferably the cathode, an anode and a solid electrolyte membrane between the cathode and the anode.

Aspect 13) A method for manufacturing a cathode for a lithium secondary battery, comprising: forming a first cathode composite layer on a cathode current collector using a first cathode slurry including a first cathode active material, which is lithium transition metal composite oxide particles having forms of secondary particles in which primary particles are aggregated, and a binder; and forming a second cathode composite layer on the first cathode composite layer using a second cathode slurry including a second cathode active material, which is lithium transition metal composite oxide particles having forms of single particles, and a binder, wherein the first cathode slurry includes a greater binder amount than the second cathode slurry, based on a weight percent value, and the binder amount in the first cathode slurry is 1.0 wt% or more and less than 5.0 wt%.

Aspect 14) The method of aspect 13, wherein the binder amount in the second cathode slurry is 0.5 to 3.5 wt%.

Aspect 15) The method of aspect 13 or 14, wherein a weight percent value ratio of the binder in the first cathode slurry to the binder in the second cathode slurry is 1.0 to 5.0:0.5 to 3.5.

## Claims

1. A cathode for a lithium secondary battery, comprising:
a cathode current collector; and
a cathode composite layer formed on the cathode current collector,
wherein the cathode composite layer includes a first cathode composite layer on a side of the cathode current collector, and a second cathode composite layer on a surface side of the cathode composite layer,
wherein the first cathode composite layer includes a first cathode active material of lithium transition metal composite oxide particles in forms of secondary particles in which primary particles are aggregated, and a binder,
wherein the second cathode composite layer includes a second cathode active material of lithium transition metal composite oxide particles in forms of single particles, and a binder.

2. The cathode of claim 1, wherein the first cathode composite layer further includes a second cathode active material.

3. The cathode of claim 1 or 2, wherein the second cathode active material is included in an amount of 1 to 49 wt% relative to a total weight of the first cathode active material and the second cathode active material included in the first cathode composite layer.

4. The cathode of one of claims 1 to 3, wherein the second cathode composite layer further includes a first cathode active material.

5. The cathode of claim 4, wherein the first cathode active material is included in an amount of 1 to 49 wt% relative to a total weight of the first cathode active material and the second cathode active material included in the second cathode composite layer.

6. The cathode of one of claims 1 to 5, wherein a thickness of the second cathode composite layer is greater than a thickness of the first cathode composite layer.

7. The cathode of claim 6, wherein the first cathode composite layer and the second cathode composite layer have a thickness ratio of 1:2 to 1:15.

8. The cathode of one of claims 1 to 7, wherein the cathode composite layer further includes a third cathode composite layer between the first cathode composite layer and the second cathode composite layer,
wherein the third cathode composite layer includes a first cathode active material and a second cathode active material.

9. The cathode of claim 8, wherein a first cathode active material amount of the third cathode composite layer is less than a first cathode active material amount of the first cathode composite layer, and
a second cathode active material amount of the third cathode composite layer is less than a second cathode active material amount of the second cathode composite layer.

10. The cathode of claim 8 or 9, wherein the third cathode composite layer includes two or more layers, and
among the two or more layers of the third cathode composite layer, a layer closer to the first cathode composite layer has a higher binder amount than a layer closer to the second cathode composite layer.

11. The cathode of one of claims 1 to 10, wherein the cathode composite layer further includes a solid electrolyte.

12. A lithium secondary battery comprising the cathode of one of claims 1 to 11, preferably the cathode, an anode and a solid electrolyte membrane between the cathode and the anode.

13. A method for manufacturing a cathode for a lithium secondary battery, comprising:
forming a first cathode composite layer on a cathode current collector using a first cathode slurry including a first cathode active material, which is lithium transition metal composite oxide particles having forms of secondary particles in which primary particles are aggregated, and a binder; and
forming a second cathode composite layer on the first cathode composite layer using a second cathode slurry including a second cathode active material, which is lithium transition metal composite oxide particles having forms of single particles, and a binder,
wherein the first cathode slurry includes a greater binder amount than the second cathode slurry, based on a weight percent value, and
the binder amount in the first cathode slurry is 1.0 wt% or more and less than 5.0 wt%.

14. The method of claim 13, wherein the binder amount in the second cathode slurry is 0.5 to 3.5 wt%.

15. The method of claim 13 or 14, wherein a weight percent value ratio of the binder in the first cathode slurry to the binder in the second cathode slurry is 1.0 to 5.0:0.5 to 3.5.
